# EUROPÄISCHE PATENTSCHRIFT

(11) **EP 3 365 637 B1**
(45) Veröffentlichungstag und Bekanntmachung des Hinweises auf die Patenterteilung: **05.02.2020**
(21) Anmeldenummer: 16763032.6
(22) Anmeldetag: 08.09.2016
(51) Int. Cl.: G01F 1/684, G01F 15/14

(54) **THERMISCHES DURCHFLUSSMESSGERÄT UND ANORDNUNG MIT EINEM ROHR UND DEM THERMISCHEN DURCHFLUSSMESSGERÄT**
THERMAL FLOW METER AND ARRANGEMENT CONSISTING OF A PIPE AND THE THERMAL FLOW METER
DÉBITMÈTRE THERMIQUE ET ARRANGEMENT COMPRENANT UN TUYAU ET LE DÉBITMÈTRE THERMIQUE

(30) Priorität: 23.10.2015 DE 102015118123
(43) Veröffentlichungstag der Anmeldung: 29.08.2018
(73) Patentinhaber: Endress+Hauser Flowtec AG, 4153 Reinach (CH)
(72) Erfinder: SCHULTHEIS, Hanno, 79539 Lörrach (DE); GRÜN, Alexander, 79539 Lörrach (DE); PAPADOPOULOU, Ermioni, 4143 Dornach (CH); GABERTHÜEL, Stephan, 4104 Oberwil (CH); BARTH, Martin, 4125 Riehen (CH); PAPATHANASIOU, Panagiotis, 4052 Basel (CH)
(74) Vertreter: Andres, Angelika Maria
(86) Internationale Anmeldenummer: PCT/EP2016/071203
(87) Internationale Veröffentlichungsnummer: WO 2017/067700

(56) Entgegenhaltungen:
- EP-A1- 0 024 327
- DE-A1-102013 006 397
- DE-T5-112012 005 695
- DE-T5-112012 005 695
- DE-U1- 20 309 694
- DE-U1- 20 309 694
- US-A1- 2011 048 564
- US-A1- 2014 352 423
- US-A1- 2015 192 442

## Beschreibung

Die vorliegende Erfindung betrifft ein thermisches Durchflussmessgerät nach dem Oberbegriff des Anspruchs 1 und eine Anordnung mit einem Rohr und dem thermischen Durchflussmessgerät.

Es sind thermische Durchflussmessgeräte bekannt, welche eine Strömungsrichtungserkennung ermöglichen. Da die Strömung bei der Durchflussmessung zumeist in einem Rohr geführt ist, unterscheidet man grundsätzlich zwischen einer ersten Strömungsrichtung und einer entgegengesetzten zweiten Strömungsrichtung. Die Strömung kann zwischen der ersten und der zweiten Richtung wechseln, beispielsweise bei einer Ringleitung einer Druckluftversorgung bei welchem ein Rückfluss entsteht. Um den Durchfluss genau spezifizieren zu können, ist daher ein Erfassen der Richtung von Interesse.

In der DE 10 2009 045 956 A1 und DE 10 2010 040 285 A1 werden zwei Sensortypen erläutert mit zwei zusätzlichen Stifthülsen, welche jeweils mit Heizern vorgesehen sind. Es wird sodann ein Entscheidungskoeffizient ermittelt, welcher eine Vorhersage ermöglicht aus welcher Richtung die Strömung sich dem thermischen Durchflussmessgerät nähert. Dabei trifft die Strömung, unabhängig ob sie sich von der ersten oder von der zweiten Strömungsrichtung nähert, stets auf eine Stifthülse mit einem Heizer.

Die US 2011/048564 A1 offenbart ein thermisches Durchflussmessgerät entsprechend der Präambel des unabhängigen Anspruchs 1.

Es ist daher die Aufgabe der vorliegenden Erfindung ein thermisches Durchflussmessgerät bereitzustellen, welches eine optimierte Geometrie des Sensorgehäuses aufweist, so dass zusätzlich zur Durchflussmessung weitere Funktionalitäten wie z.B. Sensordrift- als auch zur Richtungserkennung implementiert werden können.

Die vorliegende Erfindung löst diese Aufgabe durch ein thermisches Durchflussmessgerät mit den Merkmalen des Anspruchs 1.

Ein erfindungsgemäßes thermisches Durchflussmessgerät umfasst einen Sensor mit einem metallischen Sensorgehäuse.

Das metallische Sensorgehäuse weist einen Hohlkörper zum Anschluss an eine Einsteckvorrichtung und/oder eine Rohrwandung auf. Eine Einsteckvorrichtung kann z.B. ein Gestänge sein, an dessen Ende das vorgenannte Sensorgehäuse angeordnet ist. Dieses Gestänge wird sodann durch eine Öffnung, die zumeist im Schwerefeld am obersten Punkt eines Rohres angeordnet ist, in das Rohr eingeführt. Die zur Umwelt begrenzende Wandung des Sensorgehäuses ist somit teilweise oder vollständig einer im Rohr befindlichen Strömung eines Messmediums ausgesetzt. Alternativ zur Einsteckvorrichtung kann das metallische Sensorgehäuse auch direkt oder mittels einer Rohrverlängerung fest an einer Rohrwandung fixiert sein. Die Art der Festlegung des Sensorgehäuses bzw. des Hohlkörpers ist im Rahmen der vorliegenden Erfindung jedoch nur von nachrangiger Bedeutung.

Der vorgenannte Hohlkörper weist eine Grundfläche auf. Diese Grundfläche kann beispielsweise eben oder gewölbt ausgebildet sein.

Das Sensorgehäuse weist zumindest zwei Stifthülsen auf, welche ausgehend von der Grundfläche hervorstehen und im eingebauten Zustand vorzugsweise in den Innenbereich eines Rohres hineinragen. Die Stifthülsen können z.B. zylindrisch oder prismatisch ausgebildet sein.

Eine jede der Stifthülsen weist einen ersten Abschnitt auf mit einer Stirnfläche und einer Mantelfläche, wobei die Mantelfläche einen maximalen Abstand zur Längsachse L der Stifthülse aufweist. Dieser maximale Abstand entspricht im Fall einer zylindrischen Stifthülse dem Radius. Im Fall einer prismatischen, z.B. 6- oder 8-eckigen Stifthülse entspricht der maximale Abstand dem Abstand eines Eckpunktes zur Längsachse in einer Schnittebene senkrecht zur Längsachse der Stifthülse.

Die beiden Stifthülsen, respektive deren Längsachsen, definieren eine Verbindungsachse. In der ersten Stifthülse, insbesondere in dem endständigen Abschnitt dieser Stifthülse, ist ein erster Heizer angeordnet und in der zweiten Stifthülse, insbesondere in dem endständigen Abschnitt dieser Stifthülse, ist ein Temperatursensor zur Ermittlung der Mediumstemperatur angeordnet.

Erfindungsgemäß weist das Sensorgehäuse zumindest eine dritte Stifthülse auf, in welcher ein zweiter Heizer angeordnet ist. Weiterhin weist das Sensorgehäuse ein Strömungshindernis auf, welches derart ausgebildet ist, dass die dritte Stifthülse, und insbesondere der in der Stifthülse angeordnete Heizer, in einer ersten Strömungsrichtung zumindest teilweise im Strömungsschatten dieses Strömungshindernisses angeordnet ist. Dabei kann das Strömungshindernis beispielsweise ein ebener Steg oder auch eine zylindrisch oder prismatisch ausgebildete Stifthülse sein. Als Strömungsschatten ist ein abgelöster Nachlaufbereich und/oder ein Rezirkulationsbereich zu verstehen. Innerhalb dieses Bereichs kann der Heizer angeordnet sein, wenn der Sensor aus einer ersten Strömungsrichtung angeströmt wird.

Die erste Strömungsrichtung verläuft in einem Winkel von 80-100° zu der Verbindungsachse und die erste Strömungsrichtung liegt auf einer Ebene die senkrecht zu den Längsachsen der beiden vorgenannten Sensorhülsen liegt. Auf dieser Ebene ist zudem die Verbindungsachse angeordnet.

Eine Auswerteeinheit ist dazu eingerichtet, anhand eines Abgleichs von einem, auf Grundlage eines ersten und zweiten Leistungskoeffizienten ermittelten Entscheidungskoeffizienten mit einem Grenzwert, zu bestimmen, aus welcher Strömungsrichtung die dritte Stifthülse angeströmt wird, wobei der erste und zweite Leistungskoeffizient die von dem jeweiligen Heizer an das Medium abgegebene Heizleistung beschreiben,

Durch die vorgenannte geometrische Anordnung der ersten und zweiten, sowie der dritten Stifthülse und des Strömungshindernisses kann ein Sensordrift des ersten Heizers durch Abgleich mit dem zweiten Heizer vorgenommen werden und zugleich kann eine Erkennung der Strömungsrichtung erfolgen, also in welcher Richtung das Messmedium durch das Rohr fließt.

Vorteilhafte Ausgestaltungen sind Gegenstand der Unteransprüche. Es ist von Vorteil, wenn die Stifthülse und das Strömungshindernis derart angeordnet sind, dass das Sensorgehäuse einen spiegelsymmetrischen Aufbau aufweist, mit einer ersten Symmetrieebene, welche senkrecht zur Verbindungsachse angeordnet ist.

Die dritte Stifthülse und/oder das Strömungshindernis können vorteilhaft aus der Grundfläche hervorstehen und parallel zur ersten und/oder zweiten Stifthülse angeordnet sein.

Die erste und die zweite Stifthülsen können jeweils eine erste Länge aufweisen und die dritte Stifthülse und/oder das Strömungshindernis eine zweite Länge aufweisen, welche sich von der ersten Länge unterscheidet. Somit erfolgt die Durchflussmessung auf einer ersten Ebene senkrecht zu den Längsachsen der ersten und/oder zweiten Stifthülse und die Richtungserkennung auf einer zweiten Ebene senkrecht zu der oder den besagten Längsachsen. Durch den Höhenversatz wird gewährleistet, dass nicht der Wärmeeintrag des zweiten Heizers die Durchflussmessung an der ersten und zweiten Stifthülse stört.

Es ist insbesondere von Vorteil, wenn der erste Heizer in der ersten und/oder zweiten Stifthülse und der zweite Heizer in der dritten Stifthülse eine Heizfläche an der Außenwandung definieren, wobei sich die Längen der ersten und zweiten Stifthülsen von der Länge der dritten Stifthülse um mindestens die Länge einer Heizfläche unterscheiden.

Besonders bevorzugt umfasst das Strömungshindernis zumindest ein Element, welches eine identische Außenkontur wie die dritte Stifthülse aufweist. Dadurch kann der Sensor unabhängig von der Strömungsrichtung kalibriert werden.

Es ist von Vorteil, wenn das Strömungshindernis zumindest einen Steg umfasst, welcher zwischen der ersten und der zweiten Stifthülse angeordnet ist und welcher auf oder parallel zu einer Ebene liegt, welche durch eine Längsachse der ersten Stifthülse und der Verbindungsachse aufgespannt wird.

Für eine verbesserte Strömungsführung kann der Steg vorteilhaft einen Schlitz aufweisen.

Das Strömungshindernis und die dritte Stifthülse sind vorteilhaft derart angeordnet, dass das Sensorgehäuse eine zweite Symmetrieebene aufweist, welche senkrecht zur ersten Symmetrieebene angeordnet ist.

Eine erfindungsgemäße Anordnung umfasst ein Rohr, welches von einem Messmedium in einer ersten Strömungsrichtung durchflossen wird und ein erfindungsgemäßes thermisches Durchflussmessgerät, welches an oder in dem Rohr angeordnet ist.

Nachfolgend sind weitere vorteilhafte Ausgestaltungen der Erfindung beschrieben.

Die jeweilige erste, zweite, dritte und/oder vierte Stifthülse kann vorteilhaft einen Endabschnitt mit einer Mantelfläche aufweisen, die einen maximalen Abstand zur Längsachse d1 aufweist. Zudem kann die Stifthülse einen weiteren Abschnitt aufweisen, welcher vorzugsweise in die Grundfläche übergeht, mit einer Mantelfläche die einen maximalen Abstand zur Längsachse d2 aufweist. Bei einer kegelstumpfförmigen Mantelfläche entspricht der maximale Abstand dem größten Radius der Mantelfläche, welcher üblicherweise zugleich die fiktive Grundfläche des Kegelstumpfes bildet. Diese Grundfläche ist selbstverständlich nicht existent, da die Hülse des Sensorgehäuses als durchgehend hohl zu verstehen ist, so dass ein Temperatursensor bei der Montage des thermischen Durchflussmessgerätes über den Hohlkörper und eine endständige Öffnung der Stifthülse in diese Stifthülse einführbar und bis in den ersten Abschnitt durchführbar ist bzw. eingefädelt werden kann. Durch diesen gestuften Aufbau wird die Eigenfrequenz der jeweiligen Stifthülse erhöht.

Der erste Abschnitt kann vorteilhaft als eine zylindrische Mantelfläche aufweisen. Dadurch kann, verglichen zu einer kegelförmigen Mantelfläche, eine besonders gute Anbindung eines Heizers und eines Temperatur an die Innenwandung der Stifthülse erfolgen. Die Anbindung kann bevorzugt durch eine Kupferbrücke erfolgen, wie dies beispielsweise DE 10 2008 015 359 A1 beschrieben wird.

Damit die einzelnen Sensorelemente besonders gut thermisch entkoppelt sind und auch nur geringe Strömungsverwirbelungen erzeugen, ist es von Vorteil, wenn der maximale Innendurchmesser des ersten Abschnitts kleiner oder gleich 4 mm, vorzugsweise kleiner oder gleich 3 mm, ist. Gerade bei diesen geringen Durchmessern treten bei nicht-gestuften Stifthülsen jedoch geringere Eigenfrequenzen auf. Diesen Eigenfrequenzen werden durch die gestufte Form der erfindungsgemäßen Stiftröhrchen vorteilhafterhöht.

Jede der Stifthülsen weist vorteilhaft jeweils einen endständigen Abschnitt mit einer mediumsberührenden Stirnfläche auf. In der ersten Stifthülse, insbesondere in dem endständigen Abschnitt dieser Stifthülse, ist ein Heizer angeordnet und in der zweiten Stifthülse, insbesondere in dem endständigen Abschnitt dieser Stifthülse, ist ein Temperatursensor zur Ermittlung der Mediumstemperatur angeordnet. Freilich können auch ein weiterer Heizer und/oder ein weiterer Temperatursensoren einer jeweiligen Stifthülse angeordnet sein. Der Heizer und der Temperatursensor dienen typischerweise der Durchflussmessung.

Es ist von Vorteil, wenn der weitere Abschnitt der Stifthülse eine kegelstumpfförmige Mantelfläche aufweist. Durch die kegelförmige Ausgestaltung des zum Hohlkörper hin angeordneten Abschnitts wird zusätzlich die Eigenfrequenz der Stifthülse erhöht.

Es ist von Vorteil, wenn jede der Stifthülsen zumindest in dem endständigen Abschnitt eine Wandstärke von weniger als 0,5 mm, vorzugsweise zwischen 0,1-0,4 mm, aufweist. Die geringe Wandstärke ermöglicht eine sehr direkte und schnelle Wärmeübertragung an das Messmedium. Dadurch werden schnelle Ansprechzeiten des Sensors bei Änderung der Strömungsgeschwindigkeit des Messmediums ermöglicht, allerdings senkt sich bei dünnen Stifthülsen auch zusätzlich die Eigenfrequenz der Stifthülse. Dies wird durch die gestufte Form der erfindungsgemäßen Stifthülse jedoch kompensiert.

Die Wandstärke variiert vorteilhaft zumindest im Bereich des endständigen Abschnitts um weniger als 20%, vorzugsweise um weniger als 10%. Dadurch wird eine möglichst gleichmäßige Wärmeverteilung entlang der Stifthülse erreicht.

Für eine Druckstabilität und chemische Stabilität ist es von Vorteil, wenn das Sensorgehäuse aus Stahl und/oder Titan und/oder Hastalloy besteht.

Das metallische Sensorgehäuse kann einstückig ausgebildet sein und die Stifthülsen und der Hohlkörper können nahtfrei, insbesondere schweißnahtfrei, miteinander verbunden sein, wobei das Sensorgehäuse besonders bevorzugt als ein monolithisches Bauteil ausgebildet ist. Nahtfrei bedeutet im Kontext der vorliegenden Erfindung, dass weder eine Schweißnaht noch eine Klebe- oder Lötnaht als Verbindung zwischen den Stifthülsen und dem Hohlkörper vorhanden ist. Bei verschweißten Stifthülsen ändern sich die Wärmeübergänge mit der Temperatur, was bei einem größeren Temperaturwechsel zu einem Messfehler führen kann, dies wird bei dieser Ausführungsvariante jedoch vorteilhaft vermieden.

Es ist insbesondere von Vorteil, wenn das metallische Sensorgehäuse als ein monolithisches Bauteil ausgebildet ist. Das bedeutet, dass das Sensorgehäuse aus komplett einem Material gefertigt ist. Zwar sind durch generative Fertigungsverfahren auch Kombinationen aus mehreren Metallen oder Metalllegierungen, z.B. Stahl und Titan, realisierbar, diese sind jedoch nicht bevorzugt.

Es ist von Vorteil, wenn zumindest der endständige Abschnitt der Stifthülse eine zylindrische Mantelfläche aufweist mit einem Durchmesser und dass sich der endständige Abschnitt über eine Länge erstreckt, wobei das Verhältnis größer oder gleich fünf, vorzugsweise größer oder gleich sieben, ist.
Zur Erhöhung der Eigenfrequenz ist es von Vorteil, wenn die dritte Stifthülse eine Längsachse und eine endständige Stirnfläche aufweist,
wobei die dritte Stifthülse einen ersten Abschnitt aufweist mit der Stirnfläche und einer Mantelfläche, wobei die Mantelfläche einen maximalen Abstand zur Längsachse d1 aufweist, und dass die Stirnfläche einen weiteren Abschnitt aufweist, welcher in die Grundfläche übergeht, mit einer Mantelfläche die einen maximalen Abstand zur Längsachse d2 aufweist, wobei der maximale Abstand d2 der Mantelfläche des weiteren Abschnitts zumindest 20%, vorzugsweise zumindest 50%, größer ist als der maximale Abstand d1 der Mantelfläche des ersten Abschnitts zur Längsachse der Stifthülse hin.

Die Länge des endständigen Abschnitts kann vorteilhaft zumindest 2 mm, vorzugsweise 3-10 mm, und die Gesamtlänge einer Stifthülse zumindest 10 mm betragen.

Das Sensorgehäuse des erfindungsgemäßen Durchflussmessgerätes kann mittels eines generativen Fertigungsverfahrens, vorzugsweise mittels eines Strahlschmelzverfahrens hergestellt werden. Zwar sind entsprechende Sensorgehäuse auch über andere Fertigungsverfahren, so z.B. durch Urformverfahren, insbesondere durch das Metal Injection Molding realisierbar, allerdings hat sich gezeigt, dass besonders gute Fertigungstoleranzen und besonders dünnwandige Bauteile mit den vorgenannten bevorzugten Fertigungsverfahren erreichbar sind.
Nachfolgend wird die Erfindung anhand eines Ausführungsbeispiels und unter Zuhilfenahme der beigefügten Zeichnungen näher erläutert. Diese Beschreibung und die Figuren sind exemplarisch zu verstehen und in keinster Weise einschränkend für den Schutzbereich der vorliegenden Erfindung. Es zeigen:
- Fig. 1: Perspektivdarstellung einer ersten Ausführungsvariante eines Sensorgehäuses eines erfindungsgemäßen thermischen Durchflussmessgeräts;
- Fig. 2: Schnittansicht des Sensorgehäuses der Fig. 1;
- Fig. 2a: geschnittene Draufsicht des Sensorgehäuses der Fig. 1;
- Fig. 3: Perspektivdarstellung einer zweiten Ausführungsvariante eines Sensorgehäuses eines erfindungsgemäßen thermischen Durchflussmessgeräts;;
- Fig. 4: geschnittene Draufsicht des Sensorgehäuses der Fig. 3;
- Fig. 5: Perspektivdarstellung einer dritten Ausführungsvariante eines Sensorgehäuses eines erfindungsgemäßen thermischen Durchflussmessgeräts;;
- Fig. 6: geschnittene Draufsicht des Sensorgehäuses der Fig. 5;
- Fig. 7: Perspektivdarstellung einer vierten Ausführungsvariante eines Sensorgehäuses eines erfindungsgemäßen thermischen Durchflussmessgeräts;;
- Fig. 8: geschnittene Draufsicht des Sensorgehäuses der Fig. 7.

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Im Bereich der thermischen Durchflussmessung wird das aktive Sensorelement auch oft Heizer genannt. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung. Die Heizleistung kann durch einen sogenannten Leistungskoeffizienten PC beschrieben werden.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

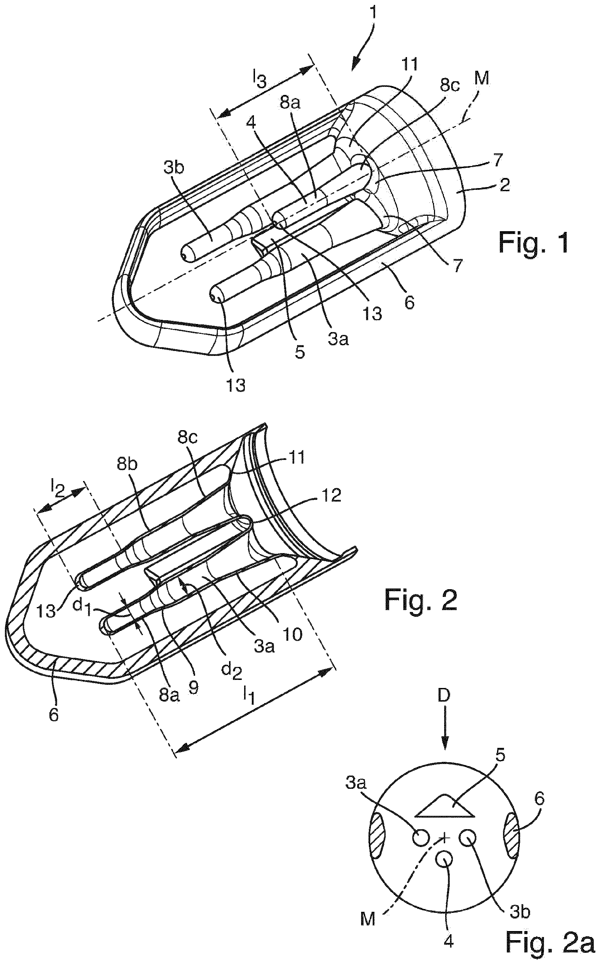

In Fig. 1, 2 und 2a ist eine besondere Variante eines thermischen Durchflussmessgerätes näher dargestellt. Dabei erkennt man insbesondere das Gehäuse eines Messaufnehmers eines thermischen Durchflussmessgerätes, welches nachfolgend als Sensorgehäuse 1 bezeichnet wird. Dieses Gehäuse ist aus Metall und kann als Einstecksensor ausgebildet sein oder fest, ggf. mit einem Zwischenstück, an der Innenwandung eines Messrohres festgelegt sein.

Zusätzlich zum Messaufnehmer weist das thermische Durchflussmessgerät selbstverständlich auch eine Auswerteeinheit auf, welche jedoch aus Gründen der Übersichtlichkeit nicht näher dargestellt ist.
Das nachfolgend beschriebene Sensorgehäuse 1 eines Messaufnehmers stellt lediglich eine besonders bevorzugte Ausführungsvariante der Erfindung dar und ist keineswegs beschränkend für den Schutzumfang der vorliegenden Erfindung zu verstehen.

Das Sensorgehäuse 1 weist einen Hohlkörper 2 auf, welcher direkt oder durch ein Zwischenstück an einer Halterung einer Einsteckvorrichtung, z.B. einer Einsteckstange, oder an einem Messrohr festgelegt werden kann.

Der Hohlkörper 2 weist eine plattenförmige Grundfläche 11 auf, ausgehend von weicher zumindest zwei, eine erste und eine zweite, Stifthülsen 3a und 3b in das Lumen, also das Innere eines Rohres, beispielsweise des Messrohres, hineinragen.

Der Hohlkörper 2 ist in der Ausführungsvariante der Fig. 1 und 2 kegelstumpfförmig dargestellt. Er kann allerdings auch eine andere Form, z.B. zylindrisch oder pyramidenstumpfförmig, aufweisen.

In Fig. 1, 2 und 2a sind insgesamt vier Stifthülsen dargestellt. Diese Variante ist bevorzugt, da mit dieser Gehäuseform mehrere Funktionalitäten, z.B. Drifterkennung und Richtungserkennung, in einem thermischen Durchflussmessgerät vorteilhaft konstruktiv vereinigt werden können.

Zugleich zeigt die Ausführungsvariante der Fig. 1 und 2, dass im Rahmen der vorliegenden Erfindung auch kompliziertere Sensorgehäusevarianten realisierbar sind.

Die vorliegende Erfindung kann in einer vereinfachten Ausführungsvariante auch lediglich die zwei Stifthülsen 3a und 3b aufweisen. Die Stifthülsen sind mit dem Hohlkörper einstückig und verbindungsnahtfrei, insbesondere im Verbindungsbereich 12, verbunden. Als Verbindungsnaht im Sinne der vorliegenden Erfindung ist eine Schweißnaht, Klebenaht, Lötnaht und dergleichen zu verstehen. Besonders bevorzugt sind ist das Gehäuse, also die Gesamtheit aus Stifthülsen und Hohlkörper, monolithisch ausgebildet.

Die erste und zweite Stifthülse 3a, 3b weisen jeweils eine mediumsberührende Stirnfläche 13 auf. Diese ist in Fig. 1 und 2 gewölbt, kann allerdings auch eben ausgebildet sein.

Die Stifthülsen 3a und 3b können jeweils gestuft ausgebildet sein, wodurch ein besseres Einführen und Positionieren eines Heizelements und/oder eines Temperatursensors in der Stifthülse durch die endständige Öffnung auf der mediumsabgewandten Seite der Stifthülse erfolgen kann.

Die geometrische Ausgestaltung einer jeweiligen Stifthülse 3a oder 3b ist dergestalt, dass ausgehend von der Stirnfläche 13 zunächst ein erster Abschnitt 8a mit zylindrischer Stifthülsenwandung und einem ersten kontinuierlichen Zylindermanteldurchmesser d1 folgt. Alternativ kann die Mantelfläche des ersten Abschnitts 8a beispielsweise auch konisch bzw. kegelstumpfförmig ausgebildet sein. Sodann folgt ein zweiter Abschnitt 8b mit einer zylindrischen Stifthülsenwandung und einem zweiten kontinuierlichen Zylindermanteldurchmesser d2. Der Übergangsbereich zwischen dem ersten und dem zweiten Abschnitt 8a und 8b ist nicht abrupt, sondern weist ein kontinuierliches Anwachsen des Durchmessers vom ersten Durchmesser d1 auf einen zweiten Durchmesser d2 auf. Es handelt sich bei einer entsprechenden Stufung 9 daher nicht um einen abrupten sondern einen allmählichen Wechsel des Durchmessers. Sodann geht die Stifthülse in einem Übergangsbereich 10 in einen dritten Abschnitt 8c über, welcher kegelstumpfförmig ausgebildet ist und bei welchem der Durchmesser d allmählich im Verlauf des Kegelstumpfs bis zu einem Übergangsbereich 7 zum Hohlkörper 2 allmählich anwächst. Die Stifthülsen 3a und 3b weisen eine Länge l1 von zumindest 10 mm aufweisen.

Dem Abschnitt 8a ist gemäß der Definition der vorliegenden Erfindung die Stirnfläche 13 zugeordnet. In diesem Abschnitt 8a eines ersten der beiden Stifthülsen 3a und 3b ist ein nicht näher dargestelltes Heizelement bzw. ein Heizer angeordnet. Dies kann z.B. auch ein beheizbares Widerstandsthermometer sein. Das Heizelement muss nicht zwingend an der Stirnfläche oder Zylindermantelfläche der Stifthülse anliegen sondern kann vorzugsweise über eine Kupferbrücke mit der Wandung der Stifthülse thermisch gekoppelt sein. Gleiches gilt auch für die weiteren optionalen Stifthülsen. Eine entsprechende Anordnung und deren Vorteile sind in der DE 10 2008 015 359 A1 im Detail beschrieben.

Im Abschnitt 8a eines zweiten der beiden Stifthülsen 3a und 3b ist Temperatursensor zur Ermittlung der Mediumstemperatur angeordnet. Dieser kann ebenfalls als beheizbares Widerstandsthermometer ausgebildet sein, wobei im Betrieb des thermischen Durchflussmessgerätes vorzugsweise jeweils eines der Widerstandsthermometer aktiv beheizt und eines der Widerstandsthermometer unbeheizt betrieben werden kann.

Die Wandstärke der Stifthülsen 3a und 3b beträgt zumindest im Abschnitt 8a weniger als 0,5 mm, vorzugsweise weniger oder gleich als 0,4 mm, insbesondere 0,1 bis 0,4 mm. Aufgrund der dünnen Wandstärke kann ein besonders günstiger Wärmeübergang erreicht werden.

Die Länge l2 dieses Abschnitts 8a kann zumindest 2 mm, vorzugsweise jedoch 3-10 mm betragen.

Das Verhältnis der Länge l2 zum Durchmesser d1 ist für den ersten Abschnitt 8a vorzugsweise größer als 5, besonders bevorzugt gleich oder größer als 7.

In einer bevorzugten Ausführungsvariante der Erfindung beträgt das durchschnittliche

Verhältnis l1/d_{Mittelwert} für die gesamte Stifthülse vorzugsweise größer als 4, wobei sich der Durchmesser immer auf die jeweilige Länge des Abschnitts der Stifthülse bezieht, in welchem der Durchmesser tatsächlich vorhanden ist. Im Falle eines Kegelstumpfes, wie in Abschnitt 8c, kann eine Mittelwertbildung der Durchmesser erfolgen.

Das Gehäuse 2 ist aus Metall gefertigt. Als besonders bevorzugtes Metall kann Stahl genutzt werden. Alternativ kann, z.B. für stark-korrosive Medien, auch Titan und/oder Hastallloy als Wandungsmaterial genutzt werden.

Zusätzlich kann das Gehäuse sodann noch mit einer metallischen Außenbeschichtung versehen werden, um ggf. die Widerstandsfähigkeit gegenüber bestimmten Medien zu erhöhen. Diese Außenbeschichtung zählt gemäß der vorliegenden Erfindung jedoch nicht zum Gehäuse 2 sondern als zusätzlich auf das Gehäuse aufgebrachte Materiallage.

Abweichend von der vorbeschriebenen Grundform für ein thermisches Durchflussmessgerät weist die in Fig. 1 und 2 dargestellte erfindungsgemäße Ausführungsvariante eine Strömungsstörung bzw. ein strömungsstörendes Element 5 auf, welche als Stifthülse oder als Massivelement ausgebildet sein kann, sowie eine ebenfalls dritte Stifthülse 4.

Die Strömungsstörung 5 weist gegenüber den ersten beiden Stifthülsen 3a und 3b zumindest in einem Endbereich mit einer Stirnfläche eine andere geometrische Querschnittsform auf. Insbesondere ist der Endbereich mit der Stirnfläche prismatisch ausgebildet. In der Ausführungsvariante der Fig. 1 und 2 ist die Querschnittsform als ein Dreieck ausgebildet. Die Strömungsstörung 5 ist in der dargestellten ersten Strömungsrichtung D vor der dritten Stifthülse 5 angeordnet.

Die erste und die zweite Sensorhülse bilden eine gemeinsame Verbindungsachse aus. Die erste Strömungsrichtung D ist derart definiert, dass sie in einem Winkel von 80-100° zu der Verbindungsachse, auf einer Ebene die senkrecht zu den Längsachsen der beiden vorgenannten Sensorhülsen verläuft und auf der die Verbindungsachse liegt, angeordnet ist. Das Messmedium in der ersten Strömungsrichtung trifft zunächst auf das Strömungshindernis 4. Das dritte Sensorelement 5 liegt teilweise oder vollständig im Strömungsschatten dieses Strömungshindernisses 4.

Je nach Positionierung des Sensors in der Mediumsströmung kann es anstatt der ersten Strömungsrichtung D auch eine zweite in den Figuren nicht dargestellte Strömungsrichtung geben, welche zur ersten Strömungsrichtung D entgegengesetzt ist. In dieser Strömungsrichtung wird die dritte Stifthülse direkt angeströmt.

Die derart angeordnete dritte Stifthülse 5, welche ebenfalls einen Heizer aufweist, kann zur Richtungserkennung genutzt werden.

Das allgemeine Verfahren zur Strömungsrichtungserkennung ist in den Druckschriften DE 10 2009 045 956 A1 und DE 10 2010 040 285 A1 beschrieben, auf welche im Rahmen der vorliegenden Erfindung vollumfänglich Bezug genommen wird.

Es erfolgt dabei die Ermittlung eines Entscheidungskoeffizienten DC auf Grundlage zweier Leistungskoeffizienten bzw. Powerkoeffizienten PC1 und PC2. Im vorliegenden Fall bezieht sich ein Leistungskoeffizient PC1 auf den Heizer in einer der Stifthülsen 3a oder 3b und ein zweiter Leistungskoeffizient auf den Heizer in der dritten Stifthülse 4. Der Entscheidungskoeffizient ermittelt sich wie folgt DC= (PC2-PC1)/PC2. Durch Abgleich des Entscheidungskoeffizienten mit einem Grenzwert kann sodann entschieden werden, von welcher Richtung die Strömung D durch ein Rohr bzw. Messrohr fließt. Es ist klar, dass der Leistungskoeffizient des Heizers der dritten Stifthülse sich ändern wird, je nachdem ob sich die Stifthülse im Strömungsschatten des Strömungshindernisses 5 aufhält oder ob sie direkt angeströmt wird.

Wie man aus Fig. 1 und 2 erkennt, weist die dritte Stifthülse 4 eine geringere Gesamtlänge l3 gegenüber der Gesamtlänge der ersten und zweiten Hülsen 3a und 3b auf. Die Hülse weist, analog zu den Stifthülse 3a, 3b eine Stirnfläche 13 auf, welche einem ersten zylindrischen Abschnitt 8a der Stifthülse 4 zugeordnet ist. An diesen ersten Abschnitt schließt sich ein dritter Abschnitt 8c an, welcher analog zu den Hülsen 3a und 3b kegelförmig ausgebildet ist. Ein zweiter zylinderischer Abschnitt 8b fehlt bei dieser Stifthülse. In dieser kürzeren vierten Stifthülse 4 ist ebenfalls ein Heizer, z.B. ein beheizbares Widerstandsthermometer, angeordnet. Zudem weist das Strömungshindernis 5 auch eine geringere Gesamtlänge l3 auf als die Gesamtlänge l1 der ersten und der zweiten Stifthülse 3a und 3b. Durch die unterschiedlichen Ebenen senkrecht zu den Längsachsen der Stifthülsen auf welchem die Heizer angeordnet sind, wird die Durchflussmessung durch die Richtungserkennung nicht beeinflusst.

Es ist verständlich, dass die kürzere dritte Stifthülse 4 auch einen anderen Anschmutzungsgrad aufweist. Daher kann auch durch Verhältnisbildung z.B. der Leistungskoeffizienten des Heizers in der ersten oder zweiten Stifthülse 3a, 3b mit dem Heizer in der dritten Stifthülse 4 eine Einschätzung des Sensordrifts über die Betriebszeit des thermischen Durchflussmessgerätes getroffen werden. Ggf. kann eine Quantifizierung des Sensordrifts erfolgen und besonders bevorzugt Kompensation des Sensordrifts bei der Durchflussmessung erfolgen.

Sofern das Strömungshindernis 5 als Sensorhülse genutzt wird, so kann auch in dieser Sensorhülse ein Heizer bzw. ein Heizelement, vorzugsweise ein beheizbares Widerstandsthermometer, eingesetzt werden. Bereits aufgrund der unterschiedlichen geometrischen Form ist ein anderes Anschmutzungsverhalten dieser Stifthülse zu erwarten und damit ein anderer Sensordrift im Verlauf der Betriebsdauer des thermischen Durchflussmessgeräts. Beispielsweise durch Differenzbildung der Leistungskoeffizienten der verschiedenen Heizelemente kann verglichen werden, um wieviel Prozent die Differenzen während des Messbetriebes ändern, so dass ein Sensordrift noch zuverlässiger detektierbar und kompensierbar ist.

Optional kann das Gehäuse 1 einen Bügel 6 aufweisen, welcher die Anordnung der ersten und der zweiten Stifthülse 3a, 3b, der optionalen vierten Stifthülse 4 und des stiftförmige Element 5 bogenförmig überspannt und mit dem Hohlkörper 2 vorzugsweise ebenfalls monolithisch und nahtfrei verbunden ist. Dieser Bügel dient vorzugsweise als strömungsführendes Element.

Ein monolithisches Sensorgehäuse mit zumindest zwei entsprechend langen dünnwandigen Stifthülsen ist zudem eine fertigungstechnische Herausforderung. Mittels Feinguss sind entsprechende Strukturen in kosten- und zeitintensiver Weise fertigbar. Die verwendeten Metallmaterialien müssen zudem auch für den Guss geeigneten sein. Für einen gelungenen Feinguss müssen u.a. viele Aspekte wie die Abkühlungsgeschwindigkeit und ggf. Nachbearbeitungsschritte zur Oberflächenbearbeitung beachtet werden. Ähnliche Nachteile treten auch bei Urformverfahren, z.B. dem sogenannten Metal Injection Molding (MIM) auf, welches grundsätzlich, auch im Rahmen der Erfindung zur Herstellung des Sensorgehäuses genutzt werden kann. Der besondere Vorteil des MIM-Verfahrens ist eine vergleichsweise hohe Fertigungsgeschwindigkeit.

Besonders bevorzugt sind generative Fertigungsverfahren, wie Strahlschmelzverfahren. wie z.B. das selektives Laserschmelzen, welches auch als SLM-Verfahren bekannt ist, um einen derartigen Gegenstand mit entsprechend-dünner Wandstärke und entsprechender Länge der Stifthülsen zu fertigen.

Beim SLM-Verfahren kann ein Metallpulver in einer dünnen Schicht auf eine Oberfläche aufgebracht werden. Das Metallpulver wird sodann durch Laserstrahlung lokal vollständig geschmolzen und erstarrt zu einer festen Materialschicht in einer Schichtdicke von typischerweise 15-150 µm. Sodann wird die Oberfläche um den Betrag der Schichtdicke abgesenkt und eine neue Materialschicht aufgetragen. Auf diese Weise bildet sich allmählich das Gehäuse 1 des Messaufnehmers heraus. Materialspannungen und korrosionsanfällige Nahtstellen sind dabei nicht vorhanden.

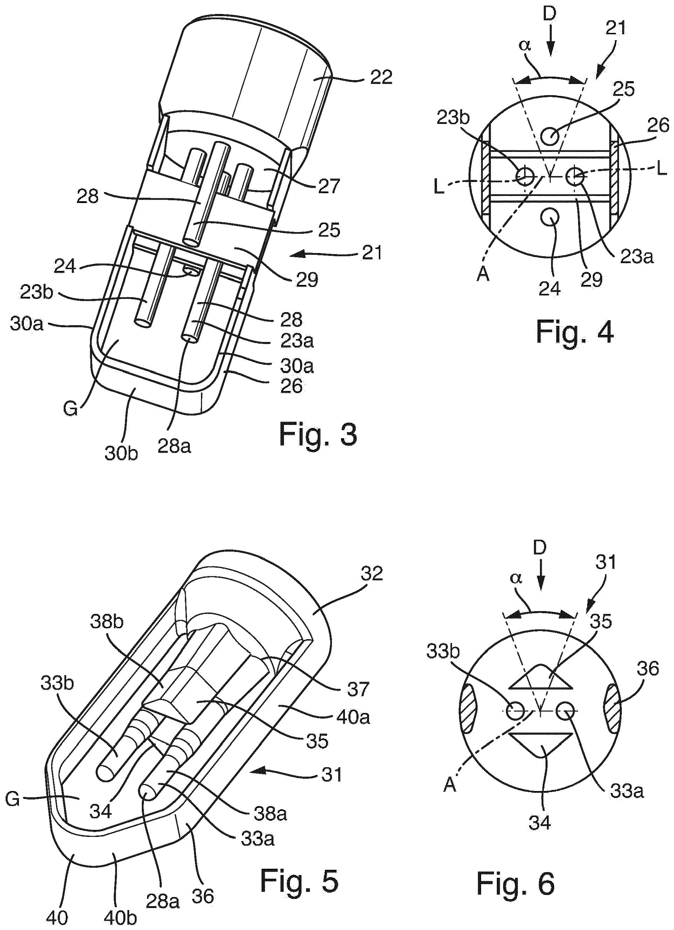

Figur 3 zeigt ein zweites Ausführungsbeispiel für ein Sensorgehäuse 21 eines erfindungsgemäßen thermischen Durchflussmessgeräts. Auch dieses Sensorgehäuse weist einen Hohlkörper 22 in zylindrischer Ausgestaltung mit einer Grundfläche 27 auf und aus welcher insgesamt vier Stifthülsen 23a, 23b, 24 und 25 hervorstehen. Eine erste und zweite Stifthülsen 23a und 23b weisen vorzugsweise eine identische Länge und ebenfalls bevorzugt eine identische Form auf. Diese beiden Stifthülsen sind lang ausgebildet, weisen eine vergleichsweise dünne Wandstärke auf und einen geringen inneren Hülsenquerschnitt auf. Bevorzugt beträgt die Gesamtlänge der Stifthülsen 23a, 23b, in Analogie zu den Fig. 2, 5 und 7 zumindest 10 mm. Der Durchschnitt der ersten und/oder zweiten Stifthülse 23a, 23b beträgt kleiner oder gleich 4mm. Ähnliche Durchmesser können ebenfalls für die weiteren zwei Stifthülsen, also einer dritten und einer vierten Stifthülsen 24 und 25, gewählt werden, sofern diese - wie in Fig. 3 - zylindrisch ausgestaltet sind. Andernfalls beträgt die bevorzugte Querschnittsfläche des inneren Hohlraums der jeweiligen dritten und/oder vierten Stifthülse kleiner oder gleich 12,6 mm².

Der jeweilige Hülsenquerschnitt der vier Stifthülsen 23a, 23b, 24 und 25 kann bevorzugt zylindrisch ausgebildet sein, allerdings auch in weniger bevorzugten Ausführungsvarianten der Erfindung drei-, vier-, fünf-, sechs- oder n-eckig, elliptisch oder jeden beliebigen anderen Querschnitt aufweisen.

Die vier Stifthülsen weisen jeweils einseitig endständig eine Stirnfläche auf, welche in diesem Ausführungsbeispiel als eine Zylindergrundfläche ausgebildet ist. Sie kann allerdings auch, wie in Fig. 2, 5 oder 7 abgerundet sein oder eine andere Form aufweisen.

In der ersten und der zweiten Stifthülse 23a, 23b ist in einem endständigen Abschnitt ein entsprechender Heizer und ein entsprechender Temperatursensor zur Ermittlung der Mediumstemperatur angeordnet. Diese beiden Stifthülsen dienen der Durchflussmessung nach dem an sich bekannten Prinzip der thermischen Durchflussmessung.

In der dritten Stifthülse 24 kann zumindest ein Heizer angeordnet sein.

Der Heizer in der ersten und/oder zweiten Stifthülse 23a und 23b und der Heizer in der dritten Stifthülse 24 definieren eine Heizfläche an der Außenwandung In einer bevorzugten Ausführungsvariante der Erfindung, welche analog für alle Ausführungsbeispiele der Fig. 1-8 gilt, liegen die Stirnfläche der dritten Stifthülse 24 und die Stirnflächen der ersten und zweiten Stifthülsen 23a, 23b nicht auf einer Ebene. Besonders bevorzugt unterscheiden sich die Längen der ersten und zweiten Stifthülsen von der Länge der dritten Stifthülse um die Länge einer Heizfläche in Richtung der Längsachse(n) der Stifthülsen. Der Verlauf der vier in Figur 3 dargestellten Stifthülsen 23a, 23b, 24 und 25 ist bevorzugt parallel. Durch die unterschiedliche Längengestaltung der Stifthülsen werden die Messsignale der Durchflussmessung durch den Heizer der dritten Stifthülse 24 nur gering oder gar nicht beeinflusst.

Die erste und die zweite Stifthülse 23a, 23b bilden eine Verbindungsachse A aus. Das Sensorgehäuse wird in einer bestimmungsgemäßen Anordnung des Durchflussmessgerätes in oder an einem Rohr bevorzugt in einem Winkel α von 80-100 Grad zu dieser Verbindungsachse vom Medium D angeströmt.

Die dritte und die vierte Stifthülse sind bevorzugt kürzer als die erste und/oder zweite Stifthülse. Die vierte Stifthülse 25 kann lediglich als Strömungshindernis dienen und kann die Symmetrie bewahren oder kann mit einem weiteren Heizer bestückt sein.

Die vorgenannten Ausgestaltungsmerkmale bezüglich der dritten und/oder vierten Stifthülsen sind ebenfalls auf die anderen in den Figuren dargestellten Ausführungsbeispiele übertragbar.

In der Fig. 3 ist zumindest ein zusätzliches ebenes plattenförmiges Strömungshindernis 29 vorgesehen mit einer Plattenebene die parallel zu einer Ebene welche durch die Verbindungsachse A der ersten und zweiten Stifthülsen und den Längsachsen L dieser Stifthülsen aufgespannt wird.

Konkret in Fig. 3 sind aus konstruktiven Gründen zur Stabilisierung eines strömungsführenden Bügels 26 und zur Wahrung der Symmetrie sogar zwei plattenförmige Strömungshindernisse 29 vorgesehen.
In Unterschied zur Ausgestaltung der Fig. 2 weist das in Fig. 3 dargestellte Ausführungsbeispiel zylindrische Stifthülsen 23a, 23b, 24 und 25 auf, welche über den gesamten Verlauf der Längsachse der Stifthülsen einen einheitlichen inneren Querschnitt und einen einheitlichen Durchmesser aufweisen. Jede Stifthülse weist also einen einzigen Abschnitt 28 mit einer Mantelfläche auf, welche einen einheitlichen inneren Querschnitt und eine einheitliche Wandstärke aufweist.

Das in Fig. 3 und 4 dargestellte Ausführungsbeispiel weist einen Bügel 26 auf, welcher die Stifthülsen überspannt. Anders aufgedrückt definiert der Bügel 26, in Analogie zu Fig. 2, 5 und 7 gemeinsam einen Innenraum bzw. einen inneren Hohlraum G innerhalb welchem die Stifthülsen 23a, 23b, 24 und 25 angeordnet sind.

Der Bügel 26 der Fig. 3 und 4 stellt eine konstruktive Variante eines strömungsführenden Elements dar. Das strömungsführende Element muss jedoch nicht zwingend als geschlossener Bügel ausgestaltet sein, sondern kann endständig geöffnet sein, also zwei längliche bereichsweise parallel zu den Stifthülsen verlaufende Elemente 30a umfassen, welche länger sind als die erste und/oder zweite Stifthülse und welche vorzugsweise auf der gleichen Verbindungsachse zwischen den beiden Stifthülsen 23a und 23b angeordnet sind. Besonders bevorzugt weist ein jedes der beiden Elemente ein Symmetriezentrum auf, welches auf der Verbindungsachse

Jedes der beiden länglichen Elemente 30a weist vorzugsweise ein Symmetriezentrum auf, welches auf der Achse A liegt. Dadurch wird die Anordnung des Sensorgehäuses in einem Rohr unabhängig davon in welcher Richtung das Medium das Rohr durchfließt, da die Strömungsführung aus beiden Seiten identisch erfolgt. Insgesamt ermöglicht die Strömungsführung Drehwinkelunempfindlichkeit, so dass die Strömungsrichtung D des Messmediums nicht zwingend im Winkel von 90° zur Verbindungsachse der Stifthülsen 23a und 23b erfolgen muss. Die Strömung kann auch um einen gewissen Versatz in einem Winkel von 83-97 Grad, vorzugsweise 80-100 Grad auf den Sensor treffen. Aufgrund der Strömungsführung tritt durch den Winkelversatz kein größerer Messfehler auf, so dass die Verankerung und das Ausrichten des Sensorgehäuses in einem Rohr mit geringerem Arbeitsaufwand erfolgen kann.

Die beiden Elemente 30a können in einer weniger bevorzugten Ausführungsvariante der Erfindung auch in Strömungsrichtung D vor der Verbindungsachse A der beiden Stifthülsen angeordnet sein. Die Strömungsrichtung D bezieht sich dabei auf eine bestimmungsgemäße Anordnung des thermischen Durchflussmessgerätes und insbesondere des Sensorgehäuses 21 in einem Rohr. In dieser Variante kommt es auf die Strömungsrichtung des Mediums im Rohr an - so dass ein beidseitiges Durchfließen von Medium oder ein entgegengerichteter Strömungsanteil, z.B. bei Rückfluss, nicht messtechnisch mit nur zwei Elementen 30a erfassbar ist. Es können allerdings zur Richtungsunabhängigkeit je ein Bügel oder zumindest je zwei Elemente 30a vor oder hinter der Verbindungsachse A angeordnet sein, welche so ausgestaltet und angeordnet ist, dass die Gesamtanordnung aus Stifthülsen und strömungsführenden Elementen eine Spiegelsymmetrie entlang der Ebene aufweisen, welche durch die Längsachsen L der ersten und zweiten Stifthülsen 23a und 23b und der Verbindungsachse A aufgespannt wird. Die spiegelsymmetrische Anordnung der strömungsführenden Elemente bzw. Bügel ermöglicht eine drehwinkelunempfindliche und strömungsrichtungsunabhängige Ausrichtung des Sensorgehäuses 21 im Messrohr. Die Strömungsrichtungs-unabhängigkeit bezieht sich dabei darauf, ob die Strömung in einem Rohr nur in Hin- oder auch in Umkehrrichtung erfassbar ist.

Das Verbindungselement 30b, welches aus den beiden länglichen Elementen 30a einen geschlossenen Bügel 26 macht, verringert unerwünschte Vibrationen der beiden länglichen Elemente, welche z.B. durch Vibrationen des Rohres, in welchem das Messgerät festgelegt ist, hervorgerufen werden können.

Die funktionale Beschreibung des Bügels mit den beiden länglichen Elementen 30a und dem Verbindungselement 30b kann analog auf die weiteren Ausführungsbeispiele der Fig. 1-8 übertragen werden.

Die Variante der Fig. 3 ist anfälliger gegenüber Vibrationen. Insgesamt weisen die Stifthülsen eine geringere Eigenfrequenz auf, wodurch sie bei vibrierenden Rohren mitschwingen und einen Messfehler verursachen können.

Demgegenüber ist die Variante der Fig. 3 und 4 einfacher fertigbar, da bei dieser Variante die Verbindung zwischen dem Hohlkörper 22 und den einzelnen Stifthülsen 23a, 23b, 24 und 25 auch durch Fügen und/oder Schweißen, insbesondere durch Laserschweißen, herstellbar ist, während die Ausführungsbeispiele der Fig. 1 und 2, sowie 5-8 auf kostenintensive Fertigungsverfahren, so z.B. generative Fertigungsverfahren, Umformverfahren oder Urformverfahren, zurückgreifen müssen um eine Verbindung der beiden vorgenannten Sensorelemente zu realisieren.

Analoge Vorteile ergeben sich bei der Verbindung des Bügels 30 mit dem Hohlkörper 22, da dieser auch durch Füge- und/oder Schweißverfahren realisierbar ist.

Figur 5 zeigt eine dritte Ausführungsvariante eines Sensorgehäuses 31 eines erfindungsgemäßen thermischen Durchflussmessgeräts. Diese Ausführungsvariante weist einen Hohlkörper 32 mit einer Grundfläche 37 auf. Eine erste und eine zweite Stifthülse 33 a und b jeweils mit kreisförmigen Querschnitten sowie zumindest eine dritte Stifthülse 34 und optional eine vierte Stifthülse mit jeweils dreiecksförmigen Querschnitten. Die erste Stifthülse 32a weist einen Heizer auf, welcher innerhalb der Stifthülse in einem Endbereich 38 a angeordnet ist. Die zweite Stifthülse 32b weist einen Temperatursensor 32b, zur Ermittlung der Mediumstemperatur, auf. Diese beiden Sensorelemente ermöglichen die Durchflussmessung. In der dritten und, optional auch in der vierten Stifthülse, ist jeweils ebenfalls ein Heizer angeordnet zur Drift- und/oder Richtungserkennung angeordnet. Das Sensorgehäuse der Fig. 5 und 6 weist im Unterschied zur Variante der Fig. 1 und 2 eine Spiegelsymmetrie bezogen auf die Außengeometrie der Sensorelemente entlang einer Ebene aus, welche durch die Verbindungsachse A zwischen der ersten und zweiten Stifthülse 23a und 23b und deren Längsachsen aufgespannt wird. Dadurch stellt die optionale vierte Stifthülse ein Strömungshindernis 35 für die Strömung des Messmediums in der in Fig. 6 dargestellten Strömungsrichtung D dar.

Anstelle der vierten Stifthülse 35 kann auch ein Massivelement als Strömungshindernis 35 vorgesehen sein. Geometrisch ist das Strömungshindernis 35 in der Ausführungsvariante der Fig. 5 und 6 zumindest im Endbereich 38b stets identisch zur Stifthülse 34 ausgestaltet. Wenngleich die Richtungs- und/oder Drifterkennung vorzugsweise auf einer anderen Höhe bzw. Ebene des Sensorgehäuses als die Durchflussmessung erfolgt kann es bei zwei im Endbereich formdifferenten Sensorelementen 34 und 35 bei bestimmten Strömungsbedingungen zu Messfehlern bei der Durchflussmessung kommen. Um dies zu verhindern hat sich vorteilhaft erwiesen, wenn die beiden Sensorelemente zur Sensordrift- und/oder Richtungserkennung eine identische Außenkontur aufweisen und spiegelsymmetrisch zur vorbeschriebenen Ebene angeordnet sind.

Im Übrigen weist das Sensorgehäuse 31 der Fig. 5 und 6 auch einen Bügel 36 mit zwei länglichen Elementen 40 a und einem vorzugsweise spitz-zulaufenden Verbindungselement 40 b zwischen den beiden länglichen Elementen auf.

Im Übrigen weisen das Sensorgehäuse und die jeweiligen Sensorelemente, so z.B. die Stifthülsen, eine geometrische Ausgestaltung analog zu Fig. 1 und 2 auf.

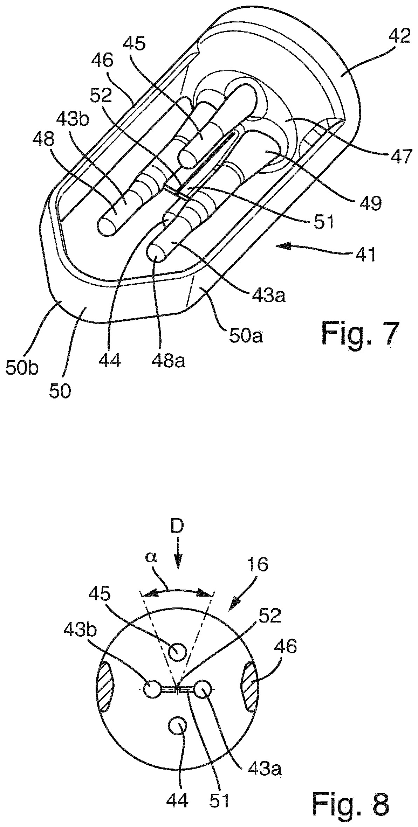

Eine vierte Ausführungsvariante eines Sensorgehäuses eines erfindungsgemäßen thermischen Durchflussmessgeräts ist in den Fig. 7 und 8 dargestellt.

Die vierte Ausführungsvariante umfasst das Sensorgehäuse 41 mit einem Hohlkörper 42 welcher über eine Grundfläche 47 verfügt. Eine erste und eine zweite Stifthülse 43 a und b stehen in Analogie zu Fig. 5 und 6 aus der besagten Grundfläche 47 hervor und umfasst in ihrem Verlauf entlang der Längsachse mehrere kreisförmige Querschnitte. Das Sensorgehäuse 41 weist zudem eine dritte Stifthülse 44 und optional eine vierte Stifthülse auf, welche jeweils Endbereiche mit zylindrischen Mantelflächen umfassen.

Die erste Stifthülse 43a weist einen Heizer auf, welcher innerhalb der Stifthülse in einem Endbereich 48 a angeordnet ist. Die zweite Stifthülse 43b weist einen Temperatursensor, zur Ermittlung der Mediumstemperatur, auf. Diese beiden Sensorelemente ermöglichen die Durchflussmessung.

In der dritten und, optional auch in der vierten Stifthülse, ist jeweils ebenfalls ein Heizer angeordnet zur Drift- und/oder Richtungserkennung angeordnet. Das Sensorgehäuse der Fig. 7 und 8 weist im Unterschied zur Variante der Fig. 1 und 2 eine Spiegelsymmetrie bezogen auf die Außengeometrie der Sensorelemente entlang einer Ebene aus, welche durch die Verbindungsachse A zwischen der ersten und zweiten Stifthülse 43a und 43b und deren Längsachsen aufgespannt wird. Dadurch stellt die optionale vierte Stifthülse ein Strömungshindernis 45 für die Strömung des Messmediums in der in Fig. 8 dargestellten Strömungsrichtung D dar.

Anstelle der vierten Stifthülse kann auch ein Massivelement als Strömungshindernis 45 vorgesehen sein. Geometrisch ist das Strömungshindernis 45 in der Ausführungsvariante der Fig. 7 und 8 zumindest im Endbereich 48 stets identisch zur dritten Stifthülse 44 ausgestaltet. Wenngleich die Richtungs- und/oder Drifterkennung vorzugsweise auf einer anderen Höhe bzw. Ebene des Sensorgehäuses als die Durchflussmessung erfolgt kann es bei zwei im Endbereich formdifferenten Sensorelementen 44 und 45 bei bestimmten Strömungsbedingungen zu Messfehlern bei der Durchflussmessung kommen. Um dies zu verhindern hat sich vorteilhaft erwiesen, wenn die beiden Sensorelemente zur Sensordrift- und/oder Richtungserkennung eine identische Außenkontur aufweisen und spiegelsymmetrisch zur vorbeschriebenen Ebene angeordnet sind.

Im Übrigen weist das Sensorgehäuse 41 der Fig. 7 und 8 auch einen Bügel 46 mit zwei länglichen Elementen 50 a und einem vorzugsweise spitz-zulaufenden Verbindungselement 50 b zwischen den beiden länglichen Elementen auf.

Weiterhin im Unterschied zu den Fig. 1-6 weist das vierte Ausführungsbeispiel einen Steg 51, der vorzugsweise als ein plattenförmiges ebenes Strömungshindernis ausgebildet ist, und welcher sich vorzugsweise zwischen den beiden Stifthülsen 43a und 43b erstreckt. Insbesondere und besonders bevorzugt ist der Steg 51 auf einer Ebene angeordnet ist, welche durch die Längsachsen der besagten Stifthülsen 43a und 43b und der Verbindungsachse zwischen den beiden Stifthülsen aufgespannt wird.

Um eine Wärmeübertragung vom einen zum anderen Sensorelement im Bereich des Stegs zu verhindern weist das plattenförmige Strömungshindernis, insbesondere der Steg 51, einen Spalt 52 auf. Dieser Spalt ist vorzugsweise weniger als 1mm breit.

Im Übrigen weisen das Sensorgehäuse und die jeweiligen Sensorelemente, so z.B. die Stifthülsen, eine geometrische Ausgestaltung analog zu Fig. 1 und 2 auf.Bevorzugt ist der Abstand der Endabschnitte 8a, 28, 38a und 48 der ersten und der zweiten Stifthülsen kleiner als 12 mm, vorzugsweise zwischen 2-10 mm.

## Patentansprüche

1. Thermisches Durchflussmessgerät umfassend einen Sensor mit einem metallischen Sensorgehäuse (1, 21, 31, 41), welches einen Hohlkörper (2, 22, 32, 42) zum Anschluss an eine Einsteckvorrichtung und/oder eine Rohrwandung aufweist, wobei der Hohlkörper (2, 22, 32, 42) eine Grundfläche (11, 27, 37, 47) aufweist;
wobei das Sensorgehäuse (1, 21, 31, 41) zumindest eine erste und eine zweite Stifthülse (3a, 3b, 23a, 23b, 33a, 33b, 43a, 43b) aufweist, welche ausgehend von der Grundfläche (11, 27, 37, 47) hervorstehen,
wobei die erste und zweite Stifthülse (3a, 3b) jeweils eine äußere, mit Medium beaufschlagbare Fläche aufweisen;
wobei die Stifthülsen (3a, 3b, 23a, 23b, 33a, 33b, 43a, 43b) jeweils eine Längsachse (L) und jeweils eine endständige Stirnfläche (13, 28a, 38a, 48a) aufweisen;
wobei die beiden Stifthülsen (3a, 3b, 23a, 23b, 33a, 33b, 43a, 43b) eine Verbindungsachse (A) definieren;
wobei eine jede der beiden Stifthülsen (3a, 3b, 23a, 23b, 33a, 33b, 43a, 43b) einen ersten Abschnitt (8a, 28, 38a, 48) mit der Stirnfläche (13, 28a, 38a, 48a) und einer Mantelfläche aufweist;
wobei in der ersten Stifthülse (3a, 23a, 33a, 43a), insbesondere in dem endständigen Abschnitt (8a, 28, 38a, 48) dieser Stifthülse (3a, 23a, 33a, 43a), ein erster Heizer angeordnet ist und dass in der zweiten Stifthülse (3b, 23b, 33b, 43b), insbesondere in dem endständigen Abschnitt (8a, 28, 38a, 48) dieser Stifthülse (3b, 23b, 33b, 43b), ein Temperatursensor zur Ermittlung der Mediumstemperatur angeordnet ist; **dadurch gekennzeichnet, dass**
das Sensorgehäuse (1, 21, 31, 41) zumindest eine dritte Stifthülse (4, 24, 34, 44) aufweist, in welcher ein zweiter Heizer angeordnet ist, und wobei das Sensorgehäuse (1, 21, 31, 41) ein Strömungshindernis (5, 25, 29, 35, 45) aufweist, welches derart ausgebildet ist, dass die dritte Stifthülse (4, 24, 34, 44) in einer ersten Strömungsrichtung (D) zumindest teilweise im Strömungsschatten dieses Strömungshindernisses (5, 25, 29, 35, 45) angeordnet ist;
wobei die erste Strömungsrichtung (D) in einem Winkel (α) von 80-100° zu der Verbindungsachse (A) verläuft und wobei die erste Strömungsrichtung (D) auf einer Ebene abgeordnet ist, die senkrecht zu den Längsachsen (L) der ersten und der zweiten Sensorhülsen (3a, 3b, 23a, 23b, 33a, 33b, 43a, 43b) angeordnet ist und wobei auf dieser Ebene die Verbindungsachse (A) angeordnet ist,
und dass eine Auswerteeinheit dazu eingerichtet ist, anhand eines Abgleichs von einem, auf Grundlage eines ersten und zweiten Leistungskoeffizienten ermittelten Entscheidungskoeffizienten mit einem Grenzwert, zu bestimmen, aus welcher Strömungsrichtung die dritte Stifthülse (4, 24, 34, 44) angeströmt wird,
wobei der erste und zweite Leistungskoeffizient die von dem jeweiligen Heizer an das Medium abgegebene Heizleistung beschreiben.

2. Thermisches Durchflussmessgerät nach Anspruch 1, **dadurch gekennzeichnet, dass** die Stifthülsen (3a, 3b, 4, 23a, 23b, 24, 33a, 33b, 34, 43a, 43b, 44) und das Strömungshindernis (5, 25, 29, 35, 45) derart angeordnet sind, dass das Sensorgehäuse (1, 21, 31, 41) einen spiegelsymmetrischen Aufbau aufweist, mit einer ersten Symmetrieebene, welche senkrecht zur Verbindungsachse (A) angeordnet ist.

3. Thermisches Durchflussmessgerät nach einem der vorhergehenden Ansprüche, **dadurch gekennzeichnet, dass** die dritte Stifthülse (4, 24, 34, 44) und/oder das Strömungshindernis (5, 25, 29, 35, 45) aus der Grundfläche (11, 27, 37, 47) hervorstehen und parallel zur ersten und/oder zweiten Stifthülse (3a, 3b, 23a, 23b, 33a, 33b, 43a, 43b) angeordnet sind.

4. Thermisches Durchflussmessgerät nach einem der vorhergehenden Ansprüche, **dadurch gekennzeichnet, dass** die erste und die zweite Stifthülsen (3a, 3b, 23a, 23b, 33a, 33b, 43a, 43b) jeweils eine erste Länge (l1) aufweisen und dass die dritte Stifthülse (4, 24, 34, 44) und/oder das Strömungshindernis (5, 25, 35, 45) eine zweite Länge (l3) aufweisen, welche sich von der ersten Länge (l1) unterscheidet.

5. Thermisches Durchflussmessgerät nach einem der vorhergehenden Ansprüche, **dadurch gekennzeichnet, dass** das Strömungshindernis (25, 35, 45) zumindest ein Element, insbesondere eine Stifthülse, umfasst, welche eine identische Außenkontur wie die dritte Stifthülse (24, 34, 44) aufweist.

6. Thermisches Durchflussmessgerät nach einem der vorhergehenden Ansprüche, **dadurch gekennzeichnet, dass** das Strömungshindernis zumindest einen Steg (29, 51) umfasst, welcher zwischen der ersten und der zweiten Stifthülse (23a, 23b, 43a, 43b) angeordnet ist und welcher sich auf oder parallel zu einer Ebene liegt, welche durch eine Längsachse (L) der ersten Stifthülse (23a, 43a) und der Verbindungsachse (A) aufgespannt wird.

7. Thermisches Durchflussmessgerät nach einem der vorhergehenden Ansprüche, **dadurch gekennzeichnet, dass** das Strömungshindernis (25, 29 35, 45) und das dritte Sensorelement (24, 34, 44) derart angeordnet sind, dass das Sensorgehäuse (21, 31, 41) eine zweite Symmetrieebene aufweist, welche senkrecht zur ersten Symmetrieebene angeordnet ist.

8. Thermisches Durchflussmessgerät nach einem der vorhergehenden Ansprüche, **dadurch gekennzeichnet, dass** der Steg (51) einen Schlitz (52) aufweist.

9. Anordnung umfassend ein Rohr welches durch ein Messmedium in einer ersten Strömungsrichtung (D) durchflossen wird und ein thermisches Durchflussmessgerät gemäß Anspruch 1, welches an oder in dem Rohr angeordnet ist.

## Claims

1. Thermal flowmeter comprising a sensor with a metal sensor housing (1, 21, 31, 41), said housing featuring a hollow body (2, 22, 32, 42) for connection to a plug-in apparatus and/or a tube wall, wherein said hollow body (2, 22, 32, 42) has a base area (11, 27, 37, 47);
wherein the sensor housing (1, 21, 31, 41) has at least a first and a second pin sleeve (3a, 3b, 23a, 23b, 33a, 33b, 43a, 43b), which project out of the base area (11, 27, 37, 47),
wherein the first and second pin sleeve (3a, 3b) each have an outer surface which can be exposed to medium;
wherein the pin sleeves (3a, 3b, 23a, 23b, 33a, 33b, 43a, 43b) each have a longitudinal axis (L) and a terminal front face (13, 28a, 38a, 48a);
wherein the two pin sleeves (3a, 3b, 23a, 23b, 33a, 33b, 43a, 43b) define a connecting axis (A) ;
wherein each of the two pin sleeves (3a, 3b, 23a, 23b, 33a, 33b, 43a, 43b) has a first section (8a, 28, 38a, 48) with the front face (13, 28a, 38a, 48a) and a lateral surface;
wherein a first heater is arranged in the first pin sleeve (3a, 23a, 33a, 43a), particularly in the terminal section (8a, 28, 38a, 48) of said pin sleeve (3a, 23a, 33a, 43a), and wherein a temperature sensor designed to determine the temperature of the medium is arranged in the second pin sleeve (3b, 23b, 33b, 43b), particularly in the terminal section (8a, 28, 38a, 48) of said pin sleeve (3b, 23b, 33b, 43b);
**characterized in that**
the sensor housing (1, 21, 31, 41) has at least a third pin sleeve (4, 24, 34, 44), in which a second heater is arranged, and wherein the sensor housing (1, 21, 31, 41) features a flow obstacle (5, 25, 29, 35, 45), which is designed in such a way that the third pin sleeve (4, 24, 34, 44) is arranged in a first flow direction (D) at least partially in the flow shadow of said flow obstacle (5, 25, 29, 35, 45); wherein the first flow direction (D) runs at an angle (α) of 80-100° in relation to the connecting axis (A) and wherein the first flow direction (D) is arranged on a plane, which is perpendicular to the longitudinal axes (L) of the first and of the second pin sleeves (3a, 3b, 23a, 23b, 33a, 33b, 43a, 43b), and wherein the connecting axis (A) is arranged on said plane,
and wherein an evaluation unit is configured to determine the flow direction from which medium flows to the third pin sleeve (4, 24, 34, 44) by comparing a decision coefficient, which is determined on the basis of a first and second power coefficient, with a limit value,
wherein the first and second power coefficient describe the heating power given off by the individual heater to the medium.

2. Thermal flowmeter as claimed in Claim 1, **characterized in that** the pin sleeves ((3a, 3b, 4, 23a, 23b, 24, 33a, 33b, 34, 43a, 43b, 44) and the flow obstacle (5, 25, 29, 35, 45) are arranged in such a way that the sensor housing (1, 21, 31, 41) has a mirror symmetry structure, with a first plane of symmetry that is arranged perpendicular to the connecting axis (A).

3. Thermal flowmeter as claimed in one of the previous claims, **characterized in that** the third pin sleeve (4, 24, 34, 44) and/or the flow obstacle (5, 25, 29, 35, 45) project out of the base area (11, 27, 37, 47) and are arranged parallel to the first and/or the second pin sleeve (3a, 3b, 23a, 23b, 33a, 33b, 43a, 43b).

4. Thermal flowmeter as claimed in one of the previous claims, **characterized in that** the first and the second pin sleeves (3a, 3b, 23a, 23b, 33a, 33b, 43a, 43b) each have a first length (l1) and **in that** the third pin sleeve (4, 24, 34, 44) and/or the flow obstacle (5, 25, 35, 45) have a second length (13), which differs from the first length (l1).

5. Thermal flowmeter as claimed in one of the previous claims, **characterized in that** the flow obstacle (25, 35, 45) has at least an element, particularly a pin sleeve, which has an identical exterior contour to the third pin sleeve (24, 34, 44).

6. Thermal flowmeter as claimed in one of the previous claims, **characterized in that** the flow obstacle comprises at least one bar (29, 51), wherein said bar is arranged between the first and the second pin sleeve (23a, 23b, 43a, 43b) and is situated on or parallel to a plane, which is delimited by a longitudinal axis (L) of the first pin sleeve (23a, 43a) and the connecting axis (A).

7. Thermal flowmeter as claimed in one of the previous claims, **characterized in that** the flow obstacle (25, 29, 35, 45) and the third sensor element (24, 34, 44) are arranged in such a way that the sensor housing (21, 31, 41) has a second plane of symmetry that is arranged perpendicular to the first plane of symmetry.

8. Thermal flowmeter as claimed in one of the previous claims, **characterized in that** the bar (51) has a slot (52).

9. Arrangement comprising a tube through which measuring medium flows in a first flow direction (D) and a thermal flowmeter as claimed in Claim 1, which is arranged on or in the tube.

## Revendications

1. Débitmètre thermique comprenant un capteur avec un boîtier de capteur métallique (1, 21, 31, 41), lequel comprend un corps creux (2, 22, 32, 42) pour le raccordement à un dispositif d'enfichage et/ou présente une paroi de tube, le corps creux (2, 22, 32, 42) présentant une surface de base (11, 27, 37, 47) ;
débitmètre pour lequel le boîtier de capteur (1, 21, 31, 41) comporte au moins une première et une deuxième douille à pointe (3a, 3b, 23a, 23b, 33a, 33b, 43a, 43b), qui font saillie à partir de la surface de base (11, 27, 37, 47),
les douilles à pointe (3a, 3b, 23a, 23b, 33a, 33b, 43a, 43b) présentant chacune un axe longitudinal (L) et chacune une surface frontale terminale (13, 28a, 38a, 48a) ;
les deux douilles à pointe (3a, 3b, 23a, 23b, 33a, 33b, 43a, 43b) définissant un axe de liaison (A) ;
chacune des deux douilles à pointe (3a, 3b, 23a, 23b, 33a, 33b, 43a, 43b) présentant une première section (8a, 28, 38a, 48) avec la face frontale (13, 28a, 38a, 48a) et une surface latérale ;
un premier élément chauffant étant disposé dans la première douille à pointe (3a, 23a, 33a, 43a), notamment dans la section terminale (8a, 28, 38a, 48) de cette douille à pointe (3a, 23a, 33a, 43a), et un capteur de température destiné à la détermination de la température du produit étant disposé dans la deuxième douille à pointe (3b, 23b, 33b, 43b), notamment dans la section terminale (8a, 28, 38a, 48) de cette douille à pointe (3b, 23b, 33b, 43b) ;
**caractérisé**
**en ce que** le boîtier de capteur (1, 21, 31, 41) comporte au moins une troisième douille à pointe (4, 24, 34, 44), dans laquelle est disposé un deuxième élément chauffant, et le boîtier de capteur (1, 21, 31, 41) comportant un obstacle d'écoulement (5, 25, 29, 35, 45), lequel est conçu de telle sorte que la troisième douille à pointe (4, 24, 34, 44) est disposée dans une première direction d'écoulement (D) au moins partiellement dans l'ombre d'écoulement de cet obstacle d'écoulement (5, 25, 29, 35, 45) ;
la première direction d'écoulement (D) s'étendant selon un angle (α) de 80-100° par rapport à l'axe de liaison (A) et la première direction d'écoulement (D) étant disposée sur un plan, qui est perpendiculaire aux axes longitudinaux (L) de la première et de la deuxième douille à pointe (3a, 3b, 23a, 23b, 33a, 33b, 43a, 43b), et l'axe de liaison (A) étant disposé sur ce plan,
et **en ce qu'**une unité d'exploitation est conçue de sorte à déterminer - au moyen d'une comparaison d'un coefficient de décision avec un seuil, déterminé sur la base d'un premier et d'un deuxième coefficient de puissance - à partir de quelle direction d'écoulement la troisième douille à pointe (4, 24, 34, 44) est parcourue par le produit, le premier et le deuxième coefficient de puissance décrivant la puissance de chauffage fournie par l'élément chauffant respectif au produit.

2. Débitmètre thermique selon la revendication 1, **caractérisé en ce que** les douilles à pointe ((3a, 3b, 4, 23a, 23b, 24, 33a, 33b, 34, 43a, 43b, 44) et l'obstacle d'écoulement (5, 25, 29, 35, 45) sont disposés de telle sorte que le boîtier de capteur (1, 21, 31, 41) présente une structure à symétrie miroir, avec un premier plan de symétrie, lequel plan est disposé perpendiculairement à l'axe de liaison (A).

3. Débitmètre thermique selon l'une des revendications précédentes, **caractérisé en ce que** la troisième douille à pointe (4, 24, 34, 44) et/ou l'obstacle d'écoulement (5, 25, 29, 35, 45) font saillie de la surface de base (11, 27, 37, 47) et sont disposés parallèlement à la première et/ou à la deuxième douille à pointe (3a, 3b, 23a, 23b, 33a, 33b, 43a, 43b).

4. Débitmètre thermique selon l'une des revendications précédentes, **caractérisé en ce que** la première et la deuxième douille à pointe (3a, 3b, 23a, 23b, 33a, 33b, 43a, 43b) présentent chacune une première longueur (l1) et **en ce que** la troisième douille à pointe (4, 24, 34, 44) et/ou l'obstacle d'écoulement (5, 25, 29, 35, 45) présentent une deuxième longueur (l3), qui diffère de la première longueur (l1).

5. Débitmètre thermique selon l'une des revendications précédentes, **caractérisé en ce que** l'obstacle d'écoulement (25, 35, 45) présente au moins un élément, notamment une douille à pointe, laquelle présente un contour extérieur identique à celui de la troisième douille à pointe (24, 34, 44).

6. Débitmètre thermique selon l'une des revendications précédentes, **caractérisé en ce que** l'obstacle d'écoulement comprend au moins une nervure (29, 51), laquelle nervure est disposée entre la première et la deuxième douille à pointe (23a, 23b, 43a, 43b) et laquelle nervure se situe sur un plan ou est parallèle à celui-ci, lequel plan est délimité par un axe longitudinal (L) de la première douille à pointe (23a, 43a) et l'axe de liaison (A).

7. Débitmètre thermique selon l'une des revendications précédentes, **caractérisé en ce que** l'obstacle d'écoulement (5, 25, 29, 35, 45) et le troisième élément capteur (24, 34, 44) sont disposés de telle sorte que le boîtier de capteur (21, 31, 41) présente un deuxième plan de symétrie, lequel plan est perpendiculaire au premier plan de symétrie.

8. Débitmètre thermique selon l'une des revendications précédentes, **caractérisé en ce que** la nervure (51) présente une fente (52).

9. Arrangement comprenant un tube parcouru par un produit de mesure dans une première direction d'écoulement (D) et un débitmètre thermique selon la revendication 1, lequel débitmètre est disposé sur ou dans le tube.
